(19)

Europäisches Patentamt
European Patent Office
Office européen des brevets

(11) **EP 3 933 011 A1**

(12) **EUROPEAN PATENT APPLICATION**

(43) Date of publication:
**05.01.2022 Bulletin 2022/01**

(51) Int Cl.:
**C10G 3/00** (2006.01)  **C07G 1/00** (2011.01)
**C08H 7/00** (2011.01)  **C11C 3/00** (2006.01)

(21) Application number: **20183388.6**

(22) Date of filing: **01.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ren Fuel K2B AB**
**102 48 Stockholm (SE)**

(72) Inventors:
• **ÖST, Amalia**
**754 22 UPPSALA (SE)**

• **SUNDÉN, Moa**
**141 68 HUDDINGE (SE)**
• **LÖFSTEDT, Joakim**
**753 29 UPPSALA (SE)**
• **DAHLSTRAND, Christian**
**757 56 UPPSALA (SE)**
• **SAMEC, Joseph**
**113 50 STOCKHOLM (SE)**

(74) Representative: **Brann AB**
**P.O. Box 3690**
**Drottninggatan 27**
**103 59 Stockholm (SE)**

(54) **LIGNIN ESTERIFIED WITH A MIXTURE OF SATURATED AND UNSATURATED FATTY ACIDS**

(57) The present invention relates to a composition of functionalized lignin where the composition exhibits a good stability and where the composition may be used for preparing fuels. The invention further relates a method of preparing the composition.

Figure 1.

**Description**

FIELD OF INVENTION

The present invention relates to a composition comprising functionalized lignin with a good stability. The functionalized lignin is esterified with a mixture of fatty acids having different degrees of saturation, i.e. the fatty acids are saturated, monounsaturated, and optionally polyunsaturated. The invention further relates to a method of preparing the composition and the use of the composition.

BACKGROUND

There is an increasing interest in using biomass as a source for fuel production. Biomass includes, but is not limited to, plant parts, fruits, vegetables, processed waste, wood chips, chaff, grain, grasses, com, com husks, weeds, aquatic plants, hay, paper, paper products, recycled paper and paper products, lignocellulosic materials, lignin and any cellulose containing biological materials or materials of biological origin.

Biofuel, such as biopetrol and biodiesel, are fuels mainly derived from biomass materials or biomass derived gases where the biomass may be wood, corn, sugarcane, animal fat, vegetable oils and so on. However, the biofuel industries are struggling with issues like the food vs. fuel debate, efficiency and the general supply of raw material. At the same time the pulp making industries produces huge amounts of lignin which is often only burned in the mill. Two common strategies for exploring lignin as a fuel or fuel component source is to convert the lignin into pyrolysis oils or to hydrogenate the lignin.

Lignin comprises chains of aromatic and oxygenate constituents, forming larger molecules that are not easily treated. A major reason for the difficulty in treating lignin is the inability to disperse or dissolve the lignin to obtain contact with catalysts that can breakdown the lignin or activate functional groups for substitution.

One drawback of using lignin as a source for fuel production is the issue of providing lignin in a form suitable for conventional hydroprocessing. In order to make lignin more useful one has to solve the problem with the low solubility of lignin in carrier liquids such as oils or fatty acids.

Prior art provides various strategies for degrading lignin into small units or molecules in order to prepare lignin derivatives that may be processed. These strategies include hydrogenation, deoxygenation and acid catalyst hydrolysis. WO2011003029 relates to a method for catalytic cleavage of carbon-carbon bonds and carbon-oxygen bonds in lignin. US20130025191 relates to a depolymerisation and deoxygenation method where lignin is treated with hydrogen together with a catalyst in an aromatic containing solvent. All these strategies relate to methods where the degradation is performed prior to eventual mixing in fatty acids or oils. WO2008157164 discloses an alternative strategy where first a dispersion agent is used to form a biomass suspension to obtain a better contact with the catalyst. These strategies usually also require isolation of the degradation products in order to separate them from unwanted reagents such as solvents or catalysts.

It is of importance that the fuel production is as efficient as possible in order to make the fuel commercially available. One strategy would be to use available oil refinery plants or common oil refinery techniques, such as hydroprocessing. In order to do so the lignin needs to be soluble in refinery media or carrier liquids such as gas oil.

In WO2015094099 the present applicant presents a strategy where lignin is modified with an ester group in order to make the lignin soluble in oils or fatty acids. The ester group is disclosed as preferably being unsaturated to avoid or minimize the formation of wax and was derived from oleic acid or from refined tall diesel (RTD).

Still, a problem with lignin compositions stored especially in gas oils is the formation of insoluble particles and increasing viscosity which in turn makes it hard or even impossible to pump. Particles needs to be removed before the feed enters the hydrotreater or cracker. Therefore, formation of insoluble particles leads to a reduction in yield and higher processing costs for refineries. Since compositions to be processed at refineries are transported and stored for days and sometimes even weeks there is a need for lignin compositions that are stable over time.

SUMMARY OF THE INVENTION

The present invention aims at overcoming the drawbacks of the prior art and to present a lignin composition that has a sufficient shelf life with a high stability over time, even at elevated temperatures (60-150°C), and therefore shows a low particle formation and no or only a moderate increase in viscosity with time. This makes it possible to store or transport the composition without any significant loss in yield and the need for additional steps of removing particles at the refinery is reduced.

A further advantage with the present invention is that it can be prepared by using common and non-scarcity components and thereby the invention is not dependent on using compounds that are only available in small quantities such as tall oil. Further by allowing the use of fatty acids obtained from different sources the present invention is not dependent on a single source and instead fatty acid sources, that for various reasons are believed not to be suitable, may be used since it may be mixed with other fatty acids.

Also, making lignin soluble in carrier liquids by avoiding the use of halogens or other contaminants the composition may be processed at conventional oil refineries. Hence, the composition according to the present invention is suitable for refinery processes for preparing fuel, biofuel or fuel type compounds.

Hence, in a first aspect the present invention relates to a composition comprising functionalized lignin wherein hydroxyl groups of the lignin is functionalized with fatty acids via an ester linkage, wherein 5-70% of the fatty acids are saturated, 20-90% of the fatty acids are monounsaturated and 0-40% of the fatty acids are polyunsaturated with proviso that the lignin is functionalized with more monounsaturated fatty acids than polyunsaturated fatty acids; and wherein the total degree of functionalization of the hydroxyl groups is 40 to 100%.

In a second aspect the present invention relates to a method of preparing a composition comprising functionalized lignin wherein the method comprises

    a. Providing a blend of free fatty acids wherein the blend comprises 5-70 weight% of saturated free fatty acids, 20-90% of monounsaturated free fatty acids and 0-40 weight% of polyunsaturated free fatty acids, or alternatively providing a blend of free fatty acids and analysing or estimating the content of the blend to determine the amount of saturated, monounsaturated and polyunsaturated free fatty acids in said blend and optionally adjusting said content to obtain a blend comprising 5-70 weight% of saturated free fatty acids, 20-90% of monounsaturated free fatty acids and 0-40 weight% of polyunsaturated free fatty acids;

    b. Providing lignin, an esterification agent and a catalyst;

    c. Allowing the free fatty acids and the esterification agent to esterify the lignin in the presence of the catalyst at an elevated temperature;

    d. Optionally removing the catalyst and/or any other by-product; and e. Optionally adding a carrier liquid.

In a third aspect the present invention relates to the use of the composition for preparing fuel, biofuel or fuel type compounds through hydroprocessing such as hydrocracking and/or hydrotreatment.

In a fourth aspect the present invention relates to a method of preparing fuel, biofuel or fuel type compounds comprising:

    a. Providing a composition according to the present invention;

    b. Optionally diluting the composition with a carrier liquid;

    c. Hydroprocessing the composition; and

    d. Isolating the fuel.

All the embodiments disclosed herein are applicable to all aspects and all embodiments may be combined unless stated otherwise.

SPECIFIC EMBODIMENTS OF THE INVENTION

According to one embodiment of the first aspect of the present invention the lignin is functionalized with fatty acids via an ester linkage, wherein more than 5weight% of the fatty acids are saturated, preferably more than 8weight%, more preferably more than 10weight%, more preferably more than 14weight%, more preferably more than 20weight%, more preferably more than 30weight%, more preferably more than 40 weight%, more preferably more than 50 weight% but less than 70weight%, preferably less than 65weight%, more preferably less than 60weight%, more preferably less than 55 weight%.

According to one embodiment of the second aspect of the present invention more than 5weight% of the free fatty acids in the blend are saturated, preferably more than 8weight%, more preferably more than 10weight%, more preferably more than 14weight%, more preferably more than 20weight%, more preferably more than 30weight%, more preferably more than 40 weight%, more preferably more than 50 weight% but less than 70weight%, preferably less than 65weight%, more preferably less than 60weight%, more preferably less than 55 weight%.

According to one embodiment of the first aspect of the present invention the lignin is functionalized with fatty acids via an ester linkage, wherein more than 20weight% of the fatty acids are monounsaturated, preferably more than 40weight%, more preferably more than 50weight%, more preferably more than 60weight%, but less than 90weight%, preferably less than 80weight%, more preferably less than 75weight%.

According to one embodiment of the second aspect of the present invention more than 20weight% of the free fatty acids in the blend are monounsaturated, preferably more than 40weight%, more preferably more than 50weight%, more preferably more than 60weight%, but less than 90weight%, preferably less than 80weight%, more preferably less than 75weight%.

According to one embodiment of the first aspect of the present invention the lignin is functionalized with fatty acids via an ester linkage, wherein less than 40weight% of the fatty acids are polyunsaturated, preferably less than 30weight%, more preferably less than 25weight%, more preferably less than 20weight%, more preferably less than 15weight%, more preferably less than 10weight%, but more than 0weight%, or more than 3weight%, or preferably more than 5weight%.

According to one embodiment of the second aspect of the present invention less than 40weight% of the fatty acids in the blend are polyunsaturated, preferably less than 30weight%, more preferably less than 25weight%, more preferably less than 20weight%, more preferably less than 15weight%, more preferably less than 10weight%, but more than 0weight%, or more than 3weight%, or preferably more than 5weight%.

The total content of fatty acids or free fatty acids in any embodiment is less than or equal to 100weight%.

According to one embodiment of the first aspect of the present invention the lignin is functionalized with fatty acids via an ester linkage, wherein 5-20 weight% of the fatty acids are saturated, 50-80 weight % of the fatty acids are monounsaturated and 1-35 weight % of the fatty acids are polyunsaturated.

According to one embodiment of the second aspect of the present invention 5-20 weight% of the free fatty acids in the blend are saturated, 50-80 weight % of the free fatty acids are monounsaturated and 1-35 weight % of the free fatty acids are polyunsaturated.

According to one embodiment of the first aspect of the present invention the lignin is functionalized with fatty acids via an ester linkage, wherein 5-10 weight % of the fatty acids are saturated, 55-75 weight % of the fatty acids are monounsaturated and 5-35 weight % of the fatty acids are polyunsaturated.

According to one embodiment of the second aspect of the present invention the 5-10 weight % of the free fatty acids in the blend are saturated, 55-75 weight % of the free fatty acids are monounsaturated and 5-35 weight % of the free fatty acids are polyunsaturated.

According to one embodiment of the first aspect of the present invention the lignin is functionalized with fatty acids via an ester linkage, wherein 40-55 weight % of the fatty acids are saturated, 40-55 weight % of the fatty acids are monounsaturated and less than 10 weight % of the fatty acids are polyunsaturated.

According to one embodiment of the second aspect of the present invention 40-55 weight % of the free fatty acids are saturated, 40-55 weight % of the free fatty acids are monounsaturated and less than 10 weight % of the free fatty acids are polyunsaturated.

According to one preferred embodiment of the first aspect or fifth aspect of the present invention the lignin is functionalized with fatty acids via an ester linkage and wherein at least 65 weight% of the fatty acids are saturated and monounsaturated, preferably at least 70 weight%, more preferably at least 75 weight%.

According to one preferred embodiment of the second aspect of the present invention at least 65 weight% of the free fatty acids in the blend are saturated and monounsaturated, preferably at least 70 weight%, more preferably at least 75 weight%.

According to one embodiment of any of the aspects of the present invention wherein the fatty acids are naturally derived and preferably derived from vegetable oils, used cooking oil (UCO) or fats or a mixture thereof.

According to one embodiment of any of the aspects of the present invention the fatty acids are derived from one or more of rapeseed oil, olive oil, peanut oil, safflower oil, sunflower oil, canola oil, avocado oil or used cooking oil preferably derived from rapeseed oil, olive oil or used cooking oil.

According to one embodiment of any of the aspects of the present invention the fatty acids are derived from two or more, or three or more of rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, or fat from microorganisms such as bacteria and algae, where in at least one is preferably derived from rapeseed oil, soybean oil, animal fat, olive oil or used cooking oil.

According to one embodiment of any of the aspects of the present invention the total degree of functionalization of the hydroxyl groups is at least 50%, preferably at least 70%, more preferably at least 80%, more preferably at least 90%, preferably 100% or 95% or lower.

According to one embodiment of any of the aspects of the present invention the lignin is Kraft lignin, preferably acid precipitated Kraft lignin. The lignin may be derived from soft wood and/or hard wood.

According to one embodiment of any of the aspects of the present invention the fatty acids or free fatty acids are C12 or longer, or preferably C14 or longer, or preferably C16 or longer, or more preferably C18 or longer but preferably C22 or shorter.

According to one embodiment of any of the aspects of the present invention the composition further comprises a carrier liquid wherein the carrier liquid is preferably selected from free fatty acids, esterified free fatty acids, triglyceride, hydrocarbon oil or a recirculated stream, or a mixture thereof.

According to one embodiment of any of the aspects of the present invention the carrier liquid is selected from triglyceride, free fatty acids or a mixture thereof and wherein said triglycerides or free fatty acids are derived from one or more, or two or more, or three or more of rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil, or animal or fish fat such as tallow, schmaltz or lard or fish oil, where in at least a part of the triglycerides or free fatty acids are preferably derived from rapeseed oil, olive oil or used cooking oil.

According to one embodiment of any of the aspects of the present invention the carrier liquid is a mixture of triglycerides or free fatty acids and hydrocarbon oil or recirculated stream.

According to one embodiment of any of the aspects of the present invention the lignin is functionalized with free fatty acids derived from rapeseed oil, olive oil or used cooking oil or a mixture thereof, and wherein the carrier liquid is selected from triglycerides or free fatty acids or a mixture thereof derived from rapeseed oil, olive oil or used cooking oil or a mixture thereof.

According to one embodiment of any of the aspects the hydrocarbon oil is a gas oil preferably light gas oil, heavy gas oil, light vacuum gas oil or heavy vacuum gas oil.

According to one preferred embodiment of any of the aspects of the present invention the content of the functionalized lignin in the composition is 1 weight% or more, or 2 weight% or more, or 4 weight% or more, or 5 weight% or more, or 7 weight% or more, or 10 weight% or more, or 12 weight% or more, or 15 weight% or more, or 20 weight% or more, or 25 weight% or more, or 30 weight% or more, 40 weight% or more, or 50 weight% or more, or 65 weight% or more, or 75 weight% or more, or essentially 100 weight%, or 98 weight% or less, or 95weight% or less, or 90 weight% or less, or 85 weight% or less. Still the composition may comprise essentially only the functionalized lignin. In one preferred embodiment the content of the functionalized lignin is 80weight% or more, or 85 weight% or more, or 90 weight% or more, or 95 weight% or more, or 98 weight% or more, but not more than 100 weight%.

According to one embodiment of any of the aspects of the present invention the content of carrier liquid is at least 20 weight%, or at least 30 weight%, or at least 40 weight%, or at least 50 weight%, or at least 60 weight% of the total composition but preferably 80 weight% or less, or 70 weight% or less of the total composition.

According to one embodiment of any of the aspects of the present invention the combined content of the functionalized lignin and the carrier liquid in the composition constitute at least 90weight% of the total composition, preferably at least 95weight%, more preferably at least 98weight%.

According to one embodiment of any of the aspects the composition is suitable for oil refinery processes such as hydroprocessing such as hydrocracking and/or hydrocracking.

According to one embodiment of the second aspect the blend of free fatty acids is hydrolysed rapeseed oil.

According to one embodiment of the second aspect the catalyst is a nitrogen containing aromatic heterocycle preferably selected from N-methyl imidazole, pyridine, 4-methylpyridine or DMAP (4-dimethylaminopyridine).

According to one embodiment of the second aspect wherein the elevated temperature is at least 150°C, preferably at least 180°C, more preferably at least 200°C but preferably not more than 250°C, preferably not more than 220°C. In one preferred embodiment the elevated temperature is 160-200°C.

According to one embodiment of the second aspect the esterification agent is an anhydride, preferably acetic anhydride.

According to one embodiment of the second aspect the amount of free fatty acids to hydroxyl groups is preferably 0.8 weight equivalents or higher, more preferably 1.0 weight equivalents or higher, more preferably 1.15 weight equivalents or higher, more preferably 1.2 weight equivalents or higher, more preferably 1.5 weight equivalents or higher, but preferably not more than 2.5 weight equivalents, preferably 2.0 weight equivalents or less, more preferably 1.7 weight equivalents or less.

According to one embodiment of the second aspect the free fatty acids are in molar excess of the hydroxyl groups on the lignin.

According to one embodiment of the second aspect the esterification agent is in molar excess of the free fatty acids.

According to one embodiment of the second aspect the functionalized lignin obtained from the method is the composition according to the first aspect or any of the embodiments of the first aspect.

According to one embodiment of the third or fourth aspect the hydroprocessing such as hydrotreatment and/or hydrocracking of the composition according to the present invention is done in a fixed bed, trickle bed, moving bed or rotating bed reactor.

According to one embodiment of the third or fourth aspect the hydroprocessing such as hydrotreatment and/or hydrocracking of the composition according to the present invention is done in a fluidized bed reactor.

According to one embodiment of the third or fourth aspect the hydroprocessing such as hydrotreatment and/or hydrocracking of the composition according to the present invention is done in a slurry reactor. For example, when the present invention is performed in a slurry reactor, the hydroprocessing may be performed at a temperature in the range of 300-500°C, such as at a temperature in the range of 400-500°C. For example, when the present invention is performed in a slurry reactor, the hydroprocessing may be performed at a pressure in the range of 100-200 bar.

According to one embodiment of the third or fourth aspect the hydroprocessing is hydrotreatment and is done at a temperature of 50-500°C, preferably at a temperature of 200-450°C, more preferably at a temperature of 250-400°C.

According to one embodiment of the third or fourth aspect the hydroprocessing is hydrocracking and is done at a temperature of 200-500°C, preferably at a temperature of 250-450°C, more preferably at a temperature of 300-400°C.

According to one embodiment of any of the aspects fuel type compounds are selected from paraffins, isoparaffins, naphthenes, mono-aromatics, naphthenic mono-aromatics, di-aromatics, tri -aromatics, indene and indane.

According to one embodiment of any of the aspects fuel type compounds are selected from paraffins, isoparaffins, naphthenes and compounds containing aromatic rings and includes methane, ethane, propane, hydrocarbon isomers (linear, branched, cyclic and combinations thereof) with a carbon skeleton ranging from C4 to approximately C50 including aromatics such as benzene, toluene, xylene and aromatic groups substituted with aliphatic groups such as ethylbenzene, and propylbenzene. Saturated compounds such as cyclohexane, ethylcyclohexane, propylcyclohexane, fuel type compounds also include compounds that potentially could be use as lubricant such as different types of saturated ring-compounds and other heavy hydrocarbon compounds, fuel type compounds also include compounds that have not been fully saturated such as different types of alkenes.

BRIEF DESCRIPTION OF THE FIGURES

Figure 1, schematic view of lignin.

Figure 2, graphs disclosing amount of insoluble particles formed in the present composition when aged in air at 150 °C after a)1 day, b) 2 days and c) 3 days (graphs prepared using MODDE Pro).

DETAILED DESCRIPTION OF THE INVENTION

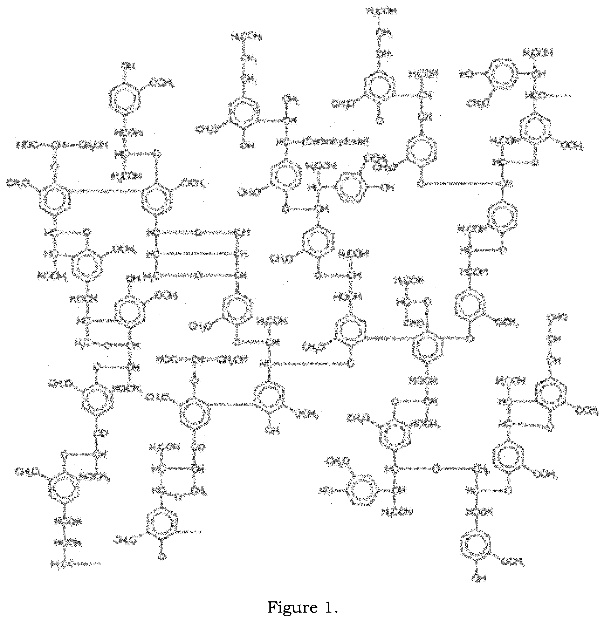

In the present application the term "lignin" means a polymer comprising coumaryl alcohol, coniferyl alcohol and sinapyl alcohol monomers. Figure 1 shows a schematic view of the lignin structure.

In the present application the terms "weight%" and "wt%" denotes the same thing and are used interchangeably.

When calculating number of repeating units and equivalents one repeating unit of lignin is assumed to be 180 Da. The number of hydroxyl groups in the lignin is measured and calculated by preparing three stock solutions according to prior art and measured using phosphorus NMR ($^{31}$PNMR), Varian 400MHz. On average each monomer unit contains between 1 to 1.17 hydroxyl groups.

Molecular weight in the present application is determined using GPC (Gel Permeation Chromatography) operated at 20°C and at flow rate of 1 ml/min using THF as solvent. Polystyrene Standard RedayCal Set M(p) 250-70000 (16 standards) (Sigma product no: 76552). The columns are Styragel THF (pre-colon), Styragel HR 3 THF (7.8x300 mm), Styragel HR 1 THF (7.8x300 mm), Styragel HR 0.5 THF (7.8x300 mm) all produced by Waters Corporation.

In the present application the term "recirculated stream" denotes a hydrotreated feed in a hydroprocess where a feed comprising a carrier liquid such as a hydrocarbon oil, fatty acids or triglycerides has been hydrotreated and is recirculated to be mixed with a fresh feed.

In the present application the term "oil" means a nonpolar chemical substance that is a viscous liquid at ambient temperature and is both hydrophobic and lipophilic.

Crude tall oil (CTO) is a product from the Kraft process and contains rosin acids, free fatty acids, fatty alcohols, unsapofinables sterols and some other minor components. By distilling and purifying CTO the amount of rosin acids is significantly reduced leaving a composition defined as TOFA. Typically, the free fatty acid content of TOFA is around 3-7wt% saturated fatty acids (mainly stearic acid), 35-45wt% monosaturated fatty acids (mainly oleic acid) and 55-60wt% polyunsaturated fatty acids (mainly linoleic acid). The content is given as weight% of the total free fatty acid content of TOFA. RTD (Refined Tall Diesel) is a product having a similar free fatty acid composition as TOFA but has a higher content of Rosin.

Rapeseed oil is obtained from the yellow flowering member of the family Brassicaceae and is one of the largest sources of vegetable oils. The fatty acids in rapeseed oil is in the form of triglyceride and by hydrolyzing rapeseed oil the free fatty acids are obtained. A typical content of free fatty acids in a rapeseed oil is around 4-15% saturated fatty acids (mainly palmitic and stearic acid), 55-80 wt% monounsaturated fatty acids (mainly oleic acid and small amount of palmitoleic acid) and 15-35wt% of polyunsaturated fatty acids (linoleic and linolenic acid). The content is given as weight% of the total content of free fatty acids.

Olive oil is obtained by pressing the fruits (olives) of Olea europaea. The fatty acids in olive oil are in the form of triglycerides and free fatty acids may be obtained by hydrolyzing the olive oil. The free fatty acid composition depends on cultivar, altitude, extraction process etc. but dominates of oleic acid. A typical content of free fatty acids in olive oil is around 12-24wt% saturated (mainly palmitic acid), 68-85wt% monounsaturated (mainly oleic acid) and 2-20 wt% polyunsaturated (mainly linoleic acid). The content is given as weight% of the total content of free fatty acids.

Used cooking oils (UCO) are oils and fats used for cooking or frying in the food processing industry, restaurants and in households and are classified as "Municipal wastes" (Renewable Energy Directive - Annex IX). In Europe around 90% of the cooking oils and fats are produced from vegetable oils. The content of free fatty acids in UCOs is highly dependent on culture or geography as well as cooking parameters such as temperature, time and what is cooked (fish, meat, bakery etc). Therefore the free fatty acid content may vary from 8-90wt% of saturated fatty acids, 5-75wt% of monosaturated fatty acids and from essentially free from polyunsaturated fatty acids up to 80wt%. The content is given as weight% of the total content of free fatty acids.

Stability is herein referred to the amount of insoluble particles present in the composition and is expressed as weight% (wt%). Stability is measured as disclosed in the Experimental section.

In the present application stability was measured at various temperatures and based on Boltzmann's constant, that the rate of reaction time doubles for every 10°C increase in temperature, a theoretical number of stable days at different temperatures are presented below.

Table 1. Shows the difference in storage days if the composition is stable for two or three days at 150 °C

| Temperature (°C) | Stable Days | | |
|---|---|---|---|
| 150 | 1 | 2 | 3 |
| 140 | 2 | 4 | 6 |
| 130 | 4 | 8 | 12 |
| 120 | 8 | 16 | 24 |
| 110 | 16 | 32 | 48 |
| 100 | 32 | 64 | 96 |

Viscosity referred to herein is dynamic viscosity and expressed in mPas. Dynamic viscosity was measured with a rotational viscometer according to the DIN EN ISO 3219 standard. The viscosity analysis was performed at shear rate 0.01 - 500 1/s at temperature 150 °C. The viscosity at share rate 310 1/s was used when comparing the viscosity of the samples.

The composition

The present invention relates to a composition comprising functionalized lignin suitable for producing fuels such as petrol and diesel in a conventional oil refinery process.

Lignin comprises hydroxyl groups along its polymeric chain. These hydroxyl groups are available for functionalization or esterification reactions such as esterification as the present applicant have disclosed in WO2015094099 which is hereby incorporated by reference. Therein the present applicant showed that esterification with fatty acids increases the solubility of lignin in carrier liquids such as gas oils thereby making lignin available for oil refinery processes.

The present invention relates to compositions comprising lignin that has been functionalized by esterification of hydroxyl groups on the lignin with a mixture of fatty acids i.e. lignin is esterified with different fatty acids. Some of the fatty acids are saturated and some of the fatty acids are unsaturated i.e. they contain one or more carbon-carbon double bond. The unsaturated fatty acids may be monounsaturated (one carbon-carbon double bond) or polyunsaturated (two or more carbon-carbon double bonds).

By using a lignin functionalized with different fatty acids the properties of the lignin and the composition may more easily be adapted. The composition is fluid at elevated temperatures and, depending on the amount of saturated, monounsaturated and polyunsaturated fatty acid the shelf life, stability, solubility, viscosity and tendency to form wax of the composition will be altered. All these properties are important especially for compositions to be used in refinery processes.

What the present inventors found was that by using a limited amount of polyunsaturated fatty acids the stability and thereby the shelf life of the composition increased. A too high content of polyunsaturated groups resulted in a significantly increase in the formation of insoluble residues even after just one day (Example 4 and Table 4). Further, the viscosity also increased with increased content of polyunsaturated groups (Table 3). On the other hand, polyunsaturated groups have a lower melting point than saturated fatty acids and saturated groups, especially saturated groups with longer carbon chains, have a higher tendency to form wax which may lead to formation of inhomogeneous compositions and impaired flowing properties. This requires heating of the composition which makes storing and transportation more expensive.

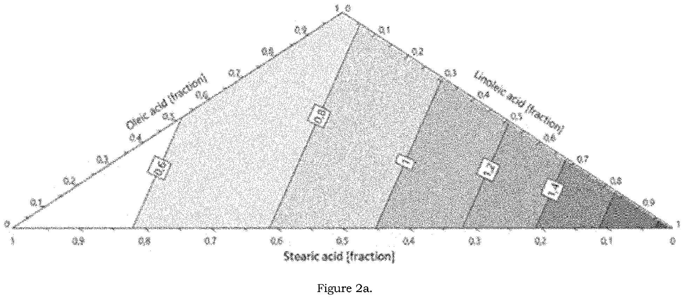

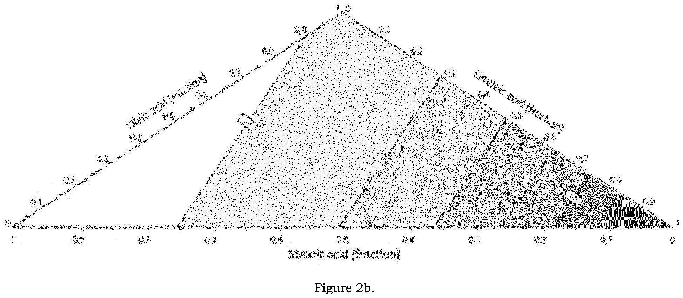

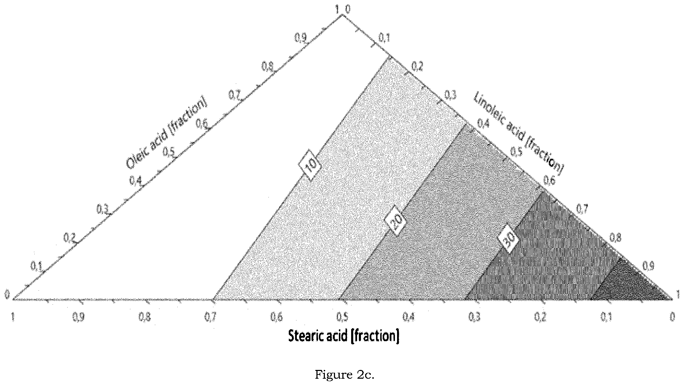

What the present inventors surprisingly also found was that monounsaturated had a stabilizing effect on the stability and especially on the stability over time and at elevated temperature, Figure 2 and Table 2 and 4. A maintained stability over time is an advantage since the composition may then be transported and stored for longer periods and even at elevated temperatures. As a non-limiting example it may be beneficial in fuel production since the composition may be produced at a production site for example near a pulp plant and shipped, usually by boat, to a refinery located far from said production site.

Hence, by knowing how the different fatty acids affect the properties of the composition the present invention provides a predictability and thereby allowing the use of natural resources in an efficient way since mixtures of fatty acids from various sources may be used.

According to the present invention 5-70% of the fatty acids are saturated, 20-90% of the fatty acids are monounsaturated and 0-40% of the fatty acids are polyunsaturated.

A high stability of the composition of the present invention is obtained and not more than 2 weight% of insoluble particles is formed when stored at 150°C for 2 days or at 100°C for 64 days, preferably not more than 1 weight%.

Furthermore, the viscosity of the composition is preferably less than 1700mPas when stored at 150°C for 2 days or at 100°C for 64 days, preferably less than 1500mPas.

In one embodiment 5-20% of the fatty acids are saturated, 55-80% of the fatty acids are monounsaturated and 1-35% of the fatty acids are polyunsaturated. In yet another preferred embodiment 5-10% of the fatty acids are saturated, 55-75% of the fatty acids are monounsaturated and 5-35% of the fatty acids are polyunsaturated. In another preferred embodiment 10-20% of the fatty acids are saturated, 60-75% of the fatty acids are monounsaturated and 5-15% of the fatty acids are polyunsaturated. These compositions and the compositions of the specific embodiments provide high stability, good solubility and acceptable viscosity and allows the use of highly available fatty acid sources.

The fatty acids are preferably C12 or longer, or preferably C14 or longer, or preferably C16 or longer, or more preferably C18 or longer or a mixture thereof. In one embodiment the fatty acids are C22 or shorter. Longer fatty acids are also believed to increase the solubility and to increase the C/O ratio.

The total degree of functionalization or esterification i.e. the degree of hydroxyl groups that has been converted into ester linkages is between 40 to 100%. A higher degree of functionalization is believed to increase the solubility of the lignin. Therefore, the degree of functionalization is at least 50%, preferably at least 70%, more preferably at least 80%, more preferably at least 90%, preferably 100% or 95% or lower. In one embodiment the degree of functionalization is 80-100%. When the degree of functionalization is lower than 100% such as 90% or lower the remaining hydroxyl groups may be acetylated. In one embodiment the degree of acetylation is at least 10%, or preferably at least 20%, preferably at least 30%, but preferably not more than 50%, preferably not more than 40%. By acetylating the lignin the amount of fatty acid needed is reduced which reduces the cost for the composition. The sum of degree of functionalization and acetylation is not more than 100%.

The fatty acids used are preferably derived from natural or renewable sources such as vegetable oils, used cooking oils, fish or animal fat or a mixture thereof. In one embodiment the fatty acids are derived from triglycerides. A non-limiting list of preferred vegetable oils, triglyceride or fatty acid sources is rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, fat from microorganisms such as bacteria and algae. Some of these sources are not suitable as the sole source since the fatty acid composition will not lead to a sufficiently stable composition. Instead, these fatty acids should be mixed with other fatty acids to obtain a suitable fatty acid composition regarding the amount of saturated and unsaturated fatty acids. An advantage of using non-tree oils or fats as source for fatty acids is that they do not contain any rosin which may form solid particles.

Allowing the use of a mixture of fatty acid sources fulfilling the requirements of the present invention regarding content of saturated, monounsaturated and polyunsaturated makes the present invention flexible regarding the access of said sources. Therefore, natural and renewable resources may be efficiently used for preparing the composition and the composition according to the present invention may be made fully of renewable non-scarcity compounds.

Fatty acids from natural sources such as vegetable oils, UCO, animal or fish fat may be in the form of triglycerides and therefore it is preferred that they are hydrolysed into the free fatty acid form before use.

An advantage of using rapeseed oil, soybean oil, animal fat, UCO and olive oil as a source of fatty acids, is the large available amounts and that it has a sufficiently low content of polyunsaturated fatty acids in comparison with other sources to form stable compositions. Olive oil and animal fat also has a high amount of saturated and monounsaturated fatty acids which further improves the stability.

An advantage of using used cooking oils (UCO) is that it is a waste product and therefore does not compete with food production. Even though the fatty acid content in UCO varies by mixing it with fatty acids derived from a source having another content the final mixture of fatty acids may be adjusted to fit into the claimed ranges and thereby obtain a more stable composition.

The lignin according to the present invention is preferably selected from Kraft lignin, sulfonated lignin, solvent extracted lignin, precipitated lignin, filtrated lignin, acetosolv lignin, steam exploded lignin, acetosolv lignin or organosolv lignin. In one embodiment the lignin is Kraft lignin, acetosolv lignin or organosolv lignin. In a preferred embodiment the lignin is Kraft lignin. In one embodiment the lignin is Kraft lignin obtained by acid precipitation and separation. In one embodiment the lignin is solvent extracted Kraft lignin. In another embodiment the lignin Kraft lignin obtained by acid precipitation and separation further purified by solvent extraction. By acid precipitation and separation Kraft lignin with a higher degree of purification is obtained.

The composition may further comprise a carrier liquid. In one embodiment the carrier liquid is preferably selected from free fatty acids, esterified free fatty acids, triglyceride, hydrocarbon oil or recirculated stream, or a mixture thereof. Triglycerides used as carrier liquid is preferably vegetable oil preferably selected from rapeseed oil, palm oil, palm kernel oil, coconut oil, carinata oil, cotton seed oil, olive oil, butter, peanut oil, safflower oil, soybean oil, corn oil, tall oil, sunflower oil, canola oil and avocado oil.

Hydrocarbon oil may be a fossil oil or a biobased oil. In one embodiment the hydrocarbon oil is selected from gas oil and mineral oil.

Preferably the carrier liquid is a mixture of free fatty acids, esterified fatty acids, triglycerides and a hydrocarbon oil or a recirculated stream. In one embodiment the carrier liquid comprises triglyceride and where said triglyceride is or comprises rapeseed oil or hydrolyzed rapeseed oil. In one embodiment the carrier liquid is or comprises triglyceride and where said triglyceride is derived from rapeseed oil and/or olive oil. The mixture is believed to increase the solubility of the lignin and may also increase, or at least maintain, the stability, the use of renewable carrier liquids such as triglycerides increase the content of renewables in the composition.

The gas oil is preferably LGO, HGO, LVGO or HVGO. The weight ratio between the gas oil and the fatty acids or vegetable oil in the carrier liquid is preferably 90:10 to 10:90, more preferably 80:20 to 20:80. By adding a carrier liquid, especially gas oil or recirculated stream, the C/O ratio is increased in the composition.

Tall oil such as RTD or TOFA may be used both as a source for free fatty acids and as a carrier liquid. When used as a source for free fatty acids it needs to be used in combination with another source in order to obtain the wanted amount of saturated and unsaturated fatty acids.

Preferably the content of carrier liquid is at least 20 weight%, or at least 30 weight%, or at least 40 weight%, or at least 50 weight%, or at least 60 weight%, but preferably 80 weight% or less, or 70 weight% or less of the total composition. In one embodiment the carrier liquid content is 60-80weight% of the total composition. The amount of carrier liquid may be varied to obtain a wanted viscosity, flowing properties, stability and/or to increase the C/O ratio.

When the lignin is functionalized with fatty acids derived from one or more vegetable oil or used cooking oils said one or more vegetable oil or used cooking oils is preferably the carrier liquid. Preferably the at least one vegetable oil or used cooking oil is hydrolysed. An advantage of using hydrolysed vegetable oils is that less hydrogen is needed in the hydroprocess.

The purpose of the carrier liquid is to carry the wanted substrate or solution into the reactor without reacting with it or in any other way affecting the substrate or solution in any substantial way.

The carrier liquid should preferably be suitable for hydroprocessing such as hydrotreater or hydrocracker, preferably a liquid suitable for both hydrotreater and catalytic cracker.

An advantage of the present invention is that the composition may contain a high content of lignin or a high content of renewable material. Preferably the content of functionalized lignin is 1 weight% or more, or 2 weight% or more, or 4 weight% or more, or 5 weight% or more, or 7 weight% or more, or 10 weight% or more, or 12 weight% or more, or 15 weight% or more, or 20 weight% or more, or 25 weight% or more, or 30 weight% or more, or 40 weight% or more, or 50 weight% or more, or 60 weight% or more, or 70weight% or more, or 80 weigh% or more, or 90 weight% or more or 95 weight% or more or 98 weight% or more or 100 weight% or less of the total content of the composition.

In one preferred embodiment the composition comprises a carrier liquid selected from triglyceride and/or free fatty acids and wherein the content of the functionalized lignin in the composition is 40 weight% or more, or 50 weight% or more, or 65 weight% or more, or 75 weight% or more, or essentially 100 weight%, or 98 weight% or less, or 95weight% or less, or 90 weight% or less, or 85 weight% or less.

For many industries, for example the fuel refinery industry processing lignin, the amount of metals should be as low as possible since metals may damage the machinery or disturb the process. The composition according to the present invention preferably has a potassium (K) content of 100 ppm or less, preferably 50 ppm or less, and a sodium (Na) content of 100 ppm or less, preferably 50 ppm or less. In one embodiment the total metal content of the composition is 50 ppm or less, or 30ppm or less. The sulphur content may be between 2000 and 5000 ppm. The nitrogen content may be 700 ppm or less, or 500 ppm or less, or 300 ppm or less. Contents are given in relation to the amount of lignin.

The method

Esterifying lignin has been known for a long time and there are different ways of esterifying lignin for example by using an acid halide or an anhydride. An advantage of using the anhydride process is that the obtained product is essentially free from halides which for some applications are highly unwanted.

Prior to esterification an analysis or estimation of the content of the blend of free fatty acids is preferred to determine the amount of saturated, monounsaturated and polyunsaturated free fatty acids. The analysis may be done using any suitable technique, for example by using GC-MS. For example, when using free fatty acids derived from vegetable oils, UCO or animal fats or mixtures thereof such an analysis or estimation indicates if the content needs to be adjusted to obtain the aimed stability. In a non-limiting example, if a UCO has a too high content (>40 weight%) of polyunsaturated free fatty acids a suitable amount of free fatty acids from for example lard, tallow, coconut oil, palm oil or olive oil is added to adjust the free fatty acid content. Alternatively said UCO is mixed with another UCO having lower content of polyunsaturated free fatty acids.

The present method relates to a method of esterifying lignin using an esterification agent such as an anhydride. In the first step the compounds and reagents are provided i.e. lignin, a blend of free fatty acids, an esterification agent and a catalyst. The blend of free fatty acids comprises 5-70 weight% of saturated fatty acids, 20-90 weight% of monounsaturated fatty acids and 0-40 weight% of polyunsaturated fatty acids.

The free fatty acids in the blend are preferably C12 or longer, or preferably C14 or longer, or preferably C16 or longer, or more preferably C18 or longer or a mixture thereof.

In one embodiment 5-20 weight% of the free fatty acids are saturated, 50-80 weight % of the free fatty acids are monounsaturated and 1-35 weight % of the free fatty acids are polyunsaturated. In yet another preferred embodiment 5-10 weight % of the free fatty acids are saturated, 55-75 weight % of the free fatty acids are monounsaturated and 5-35 weight % of the free fatty acids are polyunsaturated.

In one embodiment the blend of free fatty acids is a blend of fatty acids derived from one or more natural or renewable source wherein the content of polyunsaturated fatty acid in the blend is less than 40weight%, preferably less than 30weight%, more preferably less than 25weight%, more preferably less than 20weight%, more preferably less than 15weight%, more preferably less than 10weight%, but more than 0weight%, or more than 3weight%, or preferably more than 5weight% of the total content of free fatty acids in the blend.

In a preferred embodiment said blend of free fatty acids has a content of saturated free fatty acid of more than 5 weight%, preferably more than 8weight%, more preferably more than 10weight%, more preferably more than 14weight%, but less than 30weight%, preferably less than 25weight%, more preferably less than 22weight% of the total content of free fatty acids in the blend.

In a preferred embodiment said blend of free fatty acids has a content of monounsaturated free fatty acid of more than 20 weight%, more than 30 weight%, more preferably more than 40weight%, more preferably more than 50weight%, more preferably more than 60weight%, but less than 90weight%, preferably less than 80weight%, more preferably less than 75weight% of the total content of free fatty acids in the blend.

Preferably the free fatty acids are derived from natural or renewable sources such as vegetable oils, used cooking oils or fish or animal fat. A non-limiting list of preferred vegetable oils or fatty acid sources is rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, where in at least one is preferably derived from rapeseed oil, olive oil or used cooking oil. Some of these sources are not suitable as the sole source since the free fatty acid composition will not lead to a sufficiently stable composition. Instead the free fatty acids should be mixed with other fatty acids to obtain a suitable fatty acid composition regarding the amount of saturated and unsaturated fatty acids. A non-limiting list of preferred fish or animal fat is tallow or lard, or a mixture thereof.

Fatty acids in vegetable oils are usually in the form of triglycerides and therefore it is preferred that they are hydrolysed into the free fatty acid form before used.

As disclosed above, an advantage of the present invention is that any mixture of free fatty acids is possible as long as the mixture has a free fatty acid content that provides sufficient stability. This means that fatty acids from sources known to be rich in polyunsaturated fatty acids may be used as long as it is mixed with fatty acids from sources with low content of polyunsaturated fatty acids. In this way the product and the method are not dependent on a single or a limited number of fatty acid sources.

After the lignin and the free fatty acids are mixed the pressure is preferably reduced to 50 mbar or lower, preferably 20 mbar or lower. The temperature is preferably also increased to at least 100°C, preferably at least 130°C. There after the catalyst and the esterification agent is added and the temperature is increased to an elevated temperature of at least 150°C, preferably to 180°C or higher but preferably not higher than 300°C, or 250°C or lower, or 220°C or lower, or 200°C or lower, or 190°C or lower.

In the next step the free fatty acids and the esterification agent are allowed to esterify the lignin at an elevated temperature, preferably during reflux. The esterification reaction may be done by first allowing the free fatty acids and the esterification agent to react forming an intermediate product. For example, when the esterification agent is an anhydride and the intermediate product is a fatty acid anhydride. In the next step the intermediate product reacts with the lignin forming an ester linkage. A fatty acid anhydride is a fatty acid with an anhydride end group or two fatty acids connected via an anhydride. The reaction also produces by-products such as acetic acid which is preferably removed together with any excess of the anhydride during or after the reaction. The removal can be done by evaporation or distillation.

The esterification may also be done by allowing the esterification reagent first to react with the lignin forming a lignin intermediate product where after the free fatty acid reacts with the lignin intermediate product forming an ester linkage.

The esterification may be conducted according to any known protocol regarding temperature, time and atmosphere.

By varying the ratio or the number of equivalents between the free fatty acids to the lignin the degree of functionalization may be altered. When preparing lignin with a high degree of functionalization i.e. 70% or higher the amount of free fatty acid may be in excess to the hydroxyl groups on the lignin. The amount of free fatty acids to lignin is preferably 0.8 weight equivalents or higher, more preferably 1.0 weight equivalents or higher, more preferably 1.15 weight equivalents or higher, more preferably 1.2 weight equivalents or higher, more preferably 1.5 weight equivalents or higher, but preferably not more than 2.5 weight equivalents, preferably 2.0 weight equivalents or less, more preferably 1.7 weight equivalents or less.

In one embodiment the amount of fatty acid and esterification agent is such that the degree of functionalization is at least 50%, preferably at least 70%, more preferably at least 80%, more preferably at least 90%, preferably 100% or 95% or lower. In one embodiment the degree of functionalization is 80-100%. When the degree of functionalization is lower than 100% such as 90% or lower the remaining hydroxyl groups may be acetylated. In one embodiment the degree of acetylation is at least 10%, or preferably at least 20%, preferably at least 30%, but preferably not more than 50%, preferably not more than 40%. By acetylating the lignin the amount of fatty acid needed is reduced which reduces the cost for the composition. The sum of degree of functionalization and acetylation is not more than 100%.

As esterification agent anhydrides are preferred preferably acetic anhydride. The esterification agent is preferably used in excess to the number of hydroxyl groups. The amount of esterification agent may be in excess or in deficit to the fatty acids. When the degree of functionalization of the lignin is lower than 100% such as 90% or lower the remaining hydroxyl groups may be acetylated. This may be achieved by using an excess of acetic anhydride to hydroxyl group.

Any suitable catalyst may be used is any suitable amount. The catalyst for the esterification may be a nitrogen containing aromatic heterocycle preferably pyridine or imidazole derivatives. A non-limiting list of suitable catalysts is pyridine, 4-methylene-pyridine, 5-ethyl-2-methyl pyridine, polyvinylpyridine, 4-dimethylaminopyridine (DMAP), N,N-diisopropylethylamine, 1-methyl-pyridine, tris(2-ethylhexyl)amine, para methylpyridine, meta methylpyridine, 3,4-dimethylpyridine, 3,5-dimethylpyridine, pyrazine, 2,6-dimethylpyrazine, ethylpyrazine, 1,3,5-triazine, 5-methyloxazole, 5-ethyloxazole, 5-phenyloxazole, 5-methylthiazole, 1,2,4-thiadiazole, 1,2,4-oxadiazole, 3,4-lutidine, 3,5-lutidine, thiazole, 5-methylthiazole, poly(3,5 pyridine) and poly(2,5 pyridine).

In one preferred embodiment the catalyst is N-methyl imidazole, 4-methyl pyridine or pyridine or a mixture thereof. Since N-methyl imidazole has a higher boiling point and has a tendency to degrade and thereby result in higher nitrogen content it is preferred to replace it with 4-methyl pyridine, which is also cheaper. In one preferred embodiment the catalyst is a mixture of N-methyl imidazole and 4-methyl pyridine.

The amount of catalyst is preferably 0.5 weight equivalents or less in relation to the lignin. In one embodiment the amount is 0.2 weight equivalents or less, or 0.1 weight equivalents or less, or 0.07 weight equivalents or less but preferably 0.01 weight equivalents or more, or 0.05 weight equivalents or more.

A solvent may be used during the functionalization or esterification reaction and any suitable solvent such as pyridine or 4-methyl pyridine may be used. An advantage of using these solvents is that they have a catalytic effect on the functionalization reaction as well. The amount of solvent may be 5 to 200wt% of the weight of the lignin. In one embodiment the amount is 75 to 150wt% such as around 100wt%.

Catalysts, solvents and/or any by-product are preferably removed in order to increase the purity of the composition. When using anhydrides such as acetic anhydride an acid is formed, e.g. acetic acid, which is preferably removed continuously during the reaction or after the reaction is completed. Catalyst and by-products may be removed using any suitable conventional technique such as evaporation preferably at reduced pressure.

The functionalized lignin may be isolated or purified by precipitation in for example hexane or water or by removal of solvent and catalyst through evaporation or distillation, preferably by using reduced pressure.

A carrier liquid may be added prior, during or after the esterification reaction leaving a composition of functionalized lignin dissolved in a carrier liquid. The carrier liquid may be selected as disclosed herein.

The lignin according to the present invention is preferably selected from Kraft lignin, sulfonated lignin, solvent extracted lignin, precipitated lignin, filtrated lignin, acetosolv lignin, steam exploded lignin, acetosolv lignin or organosolv lignin. In one embodiment the lignin is Kraft lignin, acetosolv lignin or organosolv lignin. In another embodiment the lignin is Kraft lignin. By acid precipitation and separation, the Kraft lignin a higher degree of purification is obtained. Acid precipitation and separation may be done by treating black liquor with carbon dioxide to lower the pH of the liquor in order to precipitate the lignin. After dewatering and possibly also washing of the lignin is suspended in water and an acid such as sulfuric acid is added to precipitate the lignin once again where after the lignin is isolated.

Preparing fuel

The present composition may be used for preparing fuels such as biofuels, petrol or diesel using hydroprocessing methods, such as hydrotreating or hydrocracking, available at a conventional refinery.

Fuels such as biofuels, petrol or diesel may be prepared using the present composition. In order to adjust the viscosity, flowability and also to increase the C/O ratio the composition may be diluted with a suitable carrier liquid as defined herein. In a preferred embodiment the carrier liquid is a hydrocarbon oil or a recirculated stream, where the hydrocarbon oil preferably is gas oil or a mixture of carrier liquids comprising gas oil. The composition according to the present invention may be mixed with a recirculated stream in the hydroprocess. This recirculated stream may be recirculated gas oil.

The composition or the diluted composition is then hydroprocessed using any suitable hydroprocessing technique where after the fuel is isolated. Here below is a non-limiting disclosure of preferred process parameters.

During hydroprocessing, the feedstock is exposed to hydrogen gas (preferably 20-350 bar) at elevated temperatures (preferably 200-500 °C). The process takes place in the presences of a hydroprocessing catalysts such as NiMo or CoMo on alumina used in hydrotreatment and zeolites or silica used in hydrocracking.

During hydrotreating the main reactions are hydrodesulfurization (HDS), hydrodenitrogenation (HDN), and hydrodeoxygenation (HDO) where the sulphur, nitrogen and oxygen are removed as hydrogen sulphide, ammonia, carbon oxides and water. Hydrotreating also results in the saturation of olefins and aromatics.

During hydrocracking the hydrocarbons are cracked in the presence of hydrogen. Hydrocracking also facilitates the saturation of aromatics and olefins. The main purpose with hydrocracking is to produce fuel range hydrocarbons from heavier feedstocks.

There are different types of reactors in which hydroprocessing may be done. Hydrotreating is often performed in a fixed bed reactor while hydrocracking can be performed in slurry type reactors as well. Preferably the hydroprocessing is done in a fixed bed reactor. In a slurry type reactor or fluidized bed reactor, the feedstock is mixed with the catalyst rather than the catalyst being stationary.

Examples

The fatty acid samples used herein (hydrolyzed rapeseed oil, RTD sample 1 and RTD sample 2) have been analyzed with Gas chromatography - Mass Spectrometer (GC-MS).

Viscosity test and solubility test

The dynamic viscosity was measured as described above.

Procedure - Solubility test in light gas oil (LGO, boiling point range: 200-380°C)

1. Add approximately 2 g esterified Kraft lignin to the 10 ml vial
2. Place the vial with the sample in an oil bath heated to 150°C with vigorous stirring
3. Slowly add 17 ml LGO to vial stepwise. Maximum heating time; 30 min
4. Let the sample cool down to approximately 60 °C. Centrifuge for 3 min at 4400 rpm
5. Decant the supernatant and wash the insoluble particles with 5 ml of fresh LGO. Shake the vial. Centrifuge again for 3 min at 4400 rpm
6. Decant the supernatant and add 10 ml pentane. Shake the vial. Centrifuge for 3 min at 4400 rpm.
7. Decant the supernatant and dry the particles in oven (60 °C) overnight
8. Weigh the dried particles and calculate the amount of insoluble particles according to eq. 1.

$$Insoluble\ particles\ (\%) = \frac{m\ (dry\ particles)}{m\ (lignol)} \times 100 \qquad (Eq.\ 1)$$

Insoluble particles (wt%) means insoluble fraction of said sample.

Example 1 - General preparation of functionalized lignin

General procedure of kraft lignin ester preparation: In a 2 L round bottomed flask equipped with a mechanical stirrer was added dry kraft lignin (200.0 g) and free fatty acid (320.0 g). Pressure was lowered to 20 mbar, temperature was increased to 130 °C and suspension was stirred for 30 minutes. The vacuum was removed followed by slow addition of Acetic anhydride (140.0 g) and 4-Methylpyridine (30.0 g). The temperature of the oil bath was raised to 200 °C and the reaction was refluxed for 45 minutes. The pressure was lowered over 1.5 hours to 30 mbar, to distill off Acetic acid and 4-Methylpyridine, after which the reaction was further continued for 1 hour at 30 mbar to afford a homogenous liquid.

Example 2 - Preparation of lignin functionalized with fatty acids from rapeseed oil

Hydrolyzed rapeseed oil used had a free fatty acid content according to Table 1.

Table 1 Content of hydrolyzed rapeseed oil and RTD used (wt%) and normalized fatty acid contents.

|  | Saturated | Norm. | Monounsat. | Norm. | Polyunsat. | Norm. | Resin |
|---|---|---|---|---|---|---|---|
| Hydr. |  | 6 |  | 77 |  | 17 |  |
| Rapeseed oil | 6 |  | 77 |  | 17 |  | O |
| RTD samp | 3 | 3 | 38 | 40 | 55 | 57 | 5 |

In a 2 L round bottomed flask equipped with a mechanical stirrer was added dry kraft lignin (200.0 g) and the free fatty acid from hydrolyzed rapseed oil (320.0 g). Pressure was lowered to 20 mbar, temperature was increased to 130 °C and suspension was stirred for 30 minutes. The vacuum was removed followed by slow addition of Acetic anhydride (140.0 g) and 4-Methylpyridine (30.0 g). The temperature of the oil bath was raised to 200 °C, and the reaction was refluxed for 45 minutes. The pressure was lowered over 1.5 hours to 30 mbar, to distill off Acetic acid and 4-Methylpyridine, after which the reaction was further continued for 1 hour at 30 mbar to afford a homogenous liquid.
Functionlization of lignin with RTD was performed in the same manner.
Lignin functionalized with different amounts of saturated, monounsaturated and polyunsaturated were prepared in the same manner.

Example 3 - Comparison of stability between rapeseed oil and tall oil fatty acids

Esterified Kraft lignin prepared according to Example 2 were aged in air at 150 °C and analyzed based on amount of insoluble particles formed and viscosity.
The amount of insoluble particles in LGO (light gas oil) for the initial four days are summarised in table 2.

Table 2. Amount of insoluble particles in LGO for the esterified Kraft lignins aged at 150 °C.

| Solubility in LGO (wt%) | | | | | |
|---|---|---|---|---|---|
|  | Day 0 | Day 1 | Day 2 | Day 3 | Day 4 |
| Hydrolysed rapeseed oil | 0.4 | 0.9 | 0.8 | 26 | 59 |
| RTD | 6.5 | 5.8 | 42.2 | 70.7 | 106 |

As can be seen in Table 2, the sample with lignin esterified with hydrolyzed rapeseed oil show a very good stability at day 2 (corresponds to day 64 at 100°C according to Boltzman's constant) since the amount of insoluble particles is low, below 1 wt%. However, the sample with lignin esterified with RTD show a high amount of insoluble particles (42.2 wt%, respectively) at day 2 and thus that sample was considered to be not stable.

Table 3. Viscosity for compositions aged at 150°C.

| Viscosity measurement (mPas) | | | | | |
|---|---|---|---|---|---|
| Temperature 150°C, shear rate 310 1/s | | | | | |
|  | Day 0 | Day 1 | Day 2 | Day 3 | Day 4 |
| Hydrolysed rapeseed oil | 272 | 551 | 1294 | NA | NA |
| RTD | 211 | 1022 | NA | NA | NA |

As can be seen in Table 3, the viscosity of the sample with lignin esterified with hydrolysed rapeseed oil show a viscosity of below 1300 mPas at day 2 (corresponds to day 64 at 100°C according to Boltzman's constant) and thus is considered to be stable. However, the sample with lignin esterified with RTD showed a high viscosity at day 2 and thus that sample was considered to be not stable.

Example 4 - Stability at 150°C for different compositions with different amounts of fatty acids

To accelerate the ageing of the compositions, the ageing temperature was set to 150 °C as described above. Nine different compositions were prepared in accordance with Example 2 and comprise esterified lignin with different blends of free fatty acids, covering compositions containing; 0 - 100 % stearic acid (saturated fatty acid), 0 - 100 % linoleic acid (polyunsaturated fatty acid) and, 0 - 100 % oleic acid (monounsaturated fatty acid).

Samples were retrieved on day 0, 1, 2, 3, and 4. The viscosity and solubility in LGO were measured daily. The result from the solubility test in LGO are summarised in Table 4. The results were evaluated according to multivariate data analysis (MODDE® Pro (umetrics/sartorius stedim)) and are presented in Figure 2.

Already on day 1, after ageing at 150 °C in air, a differentiation between the solubility of the samples can be observed. An increased fraction of linoleic acid results in a decreased solubility in LGO (i.e. increased amount of insoluble particles). The amount of insoluble particles (insoluble fraction) of the samples with 100% stearic acid and 100% oleic acid, respectively, are negligible. The larger portion of linoleic acid you have in your composition, the more insoluble particles (insoluble fraction) are formed with time. Thus, this is a clear indication that the stability of the sample is reduced.

Table 4 Results from solubility test in LGO from esterified Kraft lignins aged at 150°C

| Stearic* acid (saturated) (fraction) | Oleic acid** (monounsaturated) (fraction) | Linoleic acid*** (polyunsaturated) (fraction) | Insoluble particles (wt. %) | | | | |
|---|---|---|---|---|---|---|---|
| | | | Day 0 | Day 1 | Day 2 | Day 3 | Day 4 |
| 0.00 | 1.00 | 0.00 | 0.4 | 0.8 | 0.8 | 1.0 | 2.2 |
| 1.00 | 0.00 | 0.00 | 0.5 | 0.4 | 0.4 | 0.9 | 3.0 |
| 0.00 | 0.00 | 1.00 | 0.4 | 2.4 | 4.9 | 48.0 | 66.0 |
| 0.17 | 0.67 | 0.17 | 0.4 | 0.5 | 0.9 | 1.6 | 29.6 |
| 0.67 | 0.17 | 0.17 | 0.8 | 0.7 | 0.8 | 1.4 | 10.1 |
| 0.17 | 0.17 | 0.67 | 0.9 | 0.9 | 8.0 | 35.1 | 68.3 |
| 0.50 | 0.00 | 0.50 | 0.8 | 1.1 | 1.5 | 1.7 | 26.9 |
| 0.00 | 0.50 | 0.50 | 2.1 | 1.7 | 3.6 | 30.9 | 26.0 |
| 0.50 | 0.50 | 0.00 | 1.3 | 1.2 | 1.1 | 0.8 | 1.5 |

*95% purity ** >90% purity *** technical grade, 58% linoleic acid and 32% oleic acid

**Claims**

1. A composition comprising functionalized lignin wherein hydroxyl groups of the lignin is functionalized with fatty acids via an ester linkage, wherein 5-70% of the fatty acids are saturated, 20-90% of the fatty acids are monounsaturated and 0-40% of the fatty acids are polyunsaturated with proviso that the lignin is functionalized with more monounsaturated fatty acids than polyunsaturated fatty acids; and wherein the total degree of functionalization of the hydroxyl groups is 40 to 100%.

2. The composition according to claim 1 wherein 5-20% of the fatty acids are saturated, 50-80% of the fatty acids are monounsaturated and 1-35% of the fatty acids are polyunsaturated.

3. The composition according to claim 1 wherein 5-10% of the fatty acids are saturated, 55-75% of the fatty acids are monounsaturated and 5-35% of the fatty acids are polyunsaturated.

4. The composition according to any one of claims 1 to 3 wherein the fatty acids are naturally derived and preferably derived from vegetable oils, used cooking oil or fats or a mixture thereof.

5. The composition according to claim 4 wherein the fatty acids are derived from one or more of rapeseed oil, olive oil, peanut oil, safflower oil, sunflower oil, canola oil, avocado oil or used cooking oil preferably derived from rapeseed oil, olive oil, used cooking oil or animal or fish fat such as tallow, schmaltz or lard or fish oil,.

6. The composition according to claim 4 wherein the fatty acids are derived from two or more, or three or more of rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, where in at least one is preferably derived from rapeseed oil, olive oil or used cooking oil.

7. The composition according to any of the preceding claims wherein the total degree of functionalization is at least 50%, preferably at least 70%, more preferably at least 80%, more preferably at least 90%, preferably 100% or 95% or lower.

8. The composition according to any of the preceding claims wherein the lignin that is functionalized is Kraft lignin, preferably acid precipitated Kraft lignin.

9. The composition according to any of the preceding claims wherein the composition further comprises a carrier liquid wherein the carrier liquid is preferably selected from free fatty acids, esterified free fatty acids, triglyceride, hydrocarbon oil or recirculated stream or a mixture thereof.

10. The composition according to claim 9 wherein the carrier liquid is selected from triglyceride, free fatty acids or a mixture thereof and wherein said triglycerides or free fatty acids are derived from one or more, or two or more, or three or more of rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil, tall oil or animal or fish fat such as tallow, schmaltz or lard or fish oil, where in at least a part of the triglycerides or free fatty acids are preferably derived from rapeseed oil, olive oil or used cooking oil.

11. The composition according to claim 9 wherein the lignin is functionalized with fatty acids derived from rapeseed oil, olive oil or used cooking oil or a mixture thereof, and wherein the carrier liquid is selected from triglycerides or free fatty acids or a mixture thereof derived from rapeseed oil, olive oil or used cooking oil or a mixture thereof.

12. The composition according to claim 9 wherein the carrier liquid is a mixture of triglycerides or free fatty acids and a gas oil.

13. The composition according to any of the preceding claims wherein the content of the functionalized lignin in the composition is 40 weight% or more, or 50 weight% or more, or 65 weight% or more, or 75 weight% or more, or essentially 100 weight%, or 98 weight% or less, or 95weight% or less, or 90 weight% or less, or 85 weight% or less.

14. The composition according to any one of claim 9 to 13 wherein the content of carrier liquid is at least 20 weight%, or at least 30 weight%, or at least 40 weight%, or at least 50 weight%, or at least 60 weight%, but preferably 80 weight% or less, or 70 weight% or less of the total composition.

15. The composition according to any one of claim 9 to 14 wherein the combined content of the functionalized lignin and the carrier liquid in the composition constitute at least 90weight% of the total composition, preferably at least 95weight%, more preferably at least 98weight%.

16. The composition according to any one of claim 1 to 15 wherein the composition is suitable for refinery processes for production of fuel.

17. A method of preparing a composition comprising functionalized lignin wherein the method comprises

    a. Providing a blend of free fatty acids wherein the blend comprises 5-70 weight% of saturated free fatty acids, 20-90% of monounsaturated free fatty acids and 0-40 weight% of polyunsaturated free fatty acids, or alternatively providing a blend of free fatty acids and analysing or estimating the content of the blend to determine the amount of saturated, monounsaturated and polyunsaturated free fatty acids in said blend and optionally adjusting said content to obtain a blend comprising 5-70 weight% of saturated free fatty acids, 20-90% of monounsaturated free fatty acids and 0-40 weight% of polyunsaturated free fatty acids;
    b. Providing lignin, an esterification agent and a catalyst;
    c. Allowing the free fatty acids and the esterification agent to esterify the lignin in the presence of the catalyst at an elevated temperature;
    d. Optionally removing the catalyst and/or any other by-product; and

e. Optionally adding a carrier liquid.

18. The method according to claim 17 wherein the free fatty acids are derived from one or more of rapeseed oil, olive oil, peanut oil, safflower oil, sunflower oil, canola oil, avocado oil or used cooking oil preferably derived from rapeseed oil, olive oil, used cooking oil or animal or fish fat such as tallow, schmaltz or lard or fish oil.

19. The method according to claim 17 wherein the free fatty acids are derived from two or more, or three or more of rapeseed oil, palm oil, palm kernel oil, coconut oil, carinata oil, cotton seed oil, olive oil, butter, peanut oil, safflower oil, soybean oil, corn oil, tall oil, sunflower oil, canola oil, avocado oil, used cooking oil or animal or fish fat such as tallow, schmaltz or lard or fish oil, where in at least a part of the free fatty acids are preferably derived from rapeseed oil, olive oil or used cooking oil.

20. The method according to any one of claims 17 to 19 wherein the elevated temperature is at least 150°C, preferably at least 180°C, more preferably at least 200°C but preferably not more than 250°C, preferably not more than 220°C.

21. The method according to any one of claims 17 to 20 wherein the esterification agent is an anhydride, preferably acetic anhydride.

22. The method according to any one of claims 17 to 21 wherein the amount of free fatty acids to hydroxyl groups is preferably 0.8 weight equivalents or higher, more preferably 1.0 weight equivalents or higher, more preferably 1.15 weight equivalents or higher, more preferably 1.2 weight equivalents or higher, more preferably 1.5 weight equivalents or higher, but preferably not more than 2.5 weight equivalents, preferably 2.0 weight equivalents or less, more preferably 1.7 weight equivalents or less.

23. The method according to any one of claims 17 to 22 wherein the esterification agent is in molar excess of the free fatty acid.

24. The method according to any one of claim 17 to 23 wherein the carrier liquid is preferably selected from free fatty acids, esterified free fatty acids, triglyceride, hydrocarbon oil or recirculated stream, or a mixture thereof.

25. The method according to any of claims 17 to 24 wherein the composition obtained from the method is the composition according to any one of claim 1 to 16.

26. Use of the composition according to any one of claim 1 to 16 for preparing fuel, biofuel or fuel type compounds through hydroprocessing such as hydrocracking and/or hydrotreatment.

27. A method of preparing fuel, biofuel or fuel type compounds comprising:

a. Providing a composition according to any one of claims 1 to 16;
b. Optionally diluting the composition with a carrier liquid;
c. Hydroprocessing the composition; and
d. Isolating the fuel.

Figure 1.

Figure 2a.

Figure 2b.

Figure 2c.

Europäisches
Patentamt

European
Patent Office

Office européen
des brevets

# EUROPEAN SEARCH REPORT

**Application Number**

EP 20 18 3388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/050661 A1 (TEKNOLOGIAN TUTKIMUSKESKUS VTT OY [FI]) 11 April 2013 (2013-04-11) | 1-15, 17-19 | INV. C10G3/00 C07G1/00 |
| Y | * claims * | 27 | C08H7/00 C11C3/00 |
| Y,D | WO 2015/094099 A1 (REN FUEL K2B AB [SE]) 25 June 2015 (2015-06-25) | 27 | |
| A | * claims * | 1-15, 17-19 | |
| X | US 2016/355535 A1 (VENDITTI RICHARD A [US] ET AL) 8 December 2016 (2016-12-08) * paragraph [0009]; claims; example * | 1,17 | |
| X | US 3 984 363 A (D ALELIO GAETANO F) 5 October 1976 (1976-10-05) * claims * | 1,17 | |

| TECHNICAL FIELDS SEARCHED (IPC) |
|---|
| C10G C07B C11C C09J C07G C08H |

The present search report has been drawn up for all claims

| Place of search | Date of completion of the search | Examiner |
|---|---|---|
| The Hague | 24 November 2020 | Van der Poel, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

[X] Only part of the claims have been paid within the prescribed time limit. The present European search report has been drawn up for those claims for which no payment was due and for those claims for which claims fees have been paid, namely claim(s):

17-19, 27

[ ] No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

[ ] All further search fees have been paid within the fixed time limit. The present European search report has been drawn up for all claims.

[ ] As all searchable claims could be searched without effort justifying an additional fee, the Search Division did not invite payment of any additional fee.

[ ] Only part of the further search fees have been paid within the fixed time limit. The present European search report has been drawn up for those parts of the European patent application which relate to the inventions in respect of which search fees have been paid, namely claims:

[ ] None of the further search fees have been paid within the fixed time limit. The present European search report has been drawn up for those parts of the European patent application which relate to the invention first mentioned in the claims, namely claims:

[ ] The present supplementary European search report has been drawn up for those parts of the European patent application which relate to the invention first mentioned in the claims (Rule 164 (1) EPC).

## ANNEX TO THE EUROPEAN SEARCH REPORT
## ON EUROPEAN PATENT APPLICATION NO.

EP 20 18 3388

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2020

| Patent document cited in search report | | Publication date | Patent family member(s) | | Publication date |
|---|---|---|---|---|---|
| WO 2013050661 | A1 | 11-04-2013 | BR | 112014008321 A2 | 18-04-2017 |
| | | | DK | 2751169 T3 | 26-11-2018 |
| | | | EP | 2751169 A1 | 09-07-2014 |
| | | | US | 2014243511 A1 | 28-08-2014 |
| | | | WO | 2013050661 A1 | 11-04-2013 |
| WO 2015094099 | A1 | 25-06-2015 | BR | 112016013916 B1 | 30-06-2020 |
| | | | CA | 2933841 A1 | 25-06-2015 |
| | | | CA | 2933848 A1 | 25-06-2015 |
| | | | CL | 2016001542 A1 | 24-03-2017 |
| | | | CN | 106132976 A | 16-11-2016 |
| | | | CN | 106164084 A | 23-11-2016 |
| | | | CN | 110079365 A | 02-08-2019 |
| | | | EP | 3083652 A1 | 26-10-2016 |
| | | | EP | 3083653 A1 | 26-10-2016 |
| | | | JP | 6525343 B2 | 05-06-2019 |
| | | | JP | 2017501290 A | 12-01-2017 |
| | | | JP | 2017503065 A | 26-01-2017 |
| | | | RU | 2016125714 A | 23-01-2018 |
| | | | SG | 11201604775T A | 28-07-2016 |
| | | | US | 2016312029 A1 | 27-10-2016 |
| | | | US | 2016312030 A1 | 27-10-2016 |
| | | | US | 2018319985 A1 | 08-11-2018 |
| | | | US | 2019367734 A1 | 05-12-2019 |
| | | | WO | 2015094098 A1 | 25-06-2015 |
| | | | WO | 2015094099 A1 | 25-06-2015 |
| US 2016355535 | A1 | 08-12-2016 | NONE | | |
| US 3984363 | A | 05-10-1976 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011003029 A
- US 20130025191 A
- WO 2008157164 A
- WO 2015094099 A